# EUROPÄISCHE PATENTSCHRIFT

(11) **EP 2 141 760 B1**
(45) Veröffentlichungstag und Bekanntmachung des Hinweises auf die Patenterteilung: **20.11.2013**
(21) Anmeldenummer: 09008770.1
(22) Anmeldetag: 03.07.2009
(51) Int. Cl.: H01M 4/66, H01G 11/22, H01G 9/04, H01M 10/052

(54) **Elektrode für einen Energiespeicher**
Electrode for an energy store device
Electrode pour un accumulateur d'énergie

(30) Priorität: 03.07.2008 DE 102008031537
(43) Veröffentlichungstag der Anmeldung: 06.01.2010
(73) Patentinhaber: Li-Tec Battery GmbH, 01917 Kamenz (DE)
(72) Erfinder: Schäfer, Tim, 99768 Harztor (DE); Gutsch, Andreas, Dr., 59348 Lüdinghausen (DE)
(74) Vertreter: Wallinger, Michael

(56) Entgegenhaltungen:
- JP-A- 1 003 959
- US-A1- 2005 214 639
- US-A1- 2007 077 494
- US-A1- 2008 100 990
- US-A1- 2008 102 359

## Beschreibung

Die vorliegende Erfindung betrifft eine Elektrode für einen Energiespeicher und einen Energiespeicher mit einer solchen Elektrode. Die Erfindung wird im Zusammenhang mit Lithium-lonen-Akkumulatoren zum Antrieb von Elektrofahrzeugen oder elektrischen Hybridfahrzeugen beschrieben. Es wird darauf hingewiesen, dass die Erfindung auch auf Batterien mit abweichender Chemie bzw. unabhängig vom Einsatz der Batterie zur Versorgung des Antriebs eines Elektrofahrzeugs oder elektrischen Hybridfahrzeugs Anwendung finden kann.

Energiespeicher werden vermehrt in Elektrofahrzeugen und elektrischen Hybridfahrzeugen eingesetzt, weshalb zunehmend Bedarf an Energiespeichern mit einer großen Kapazität, einer hohen Leistung und einer Langzeitstabilität besteht. Unter den Energiespeichern nehmen die Lithium(ionen)zellen insbesondere als Sekundärzellen aufgrund ihrer hohen spezifischen Energiespeicherdichte eine besondere Stellung ein.

Ein Beispiel einer geschichteten Lithiumionenzelle ist in der DE 10 2005 042 916 A1 offenbart und ein Beispiel einer gewickelten Lithiumionenzelle ist in der EP 0 949 699 B1 offenbart. Der hier als Lithiumionenzelle ausgebildete Energiespeicher enthält jeweils eine erste Elektrode, eine zweite Elektrode und ein Trennelement zwischen der ersten und der zweiten Elektrode bzw. eine abwechselnd übereinander gestapelte Anordnung dieser Komponenten. Wie zum Beispiel in der DE 10 2005 042 916 A1 genauer ausgeführt, sind die Elektroden dabei üblicherweise aus einem Elektrodenträger gebildet, auf den einseitig oder beidseitig ein aktives Elektrodenmaterial aufgebracht ist. Im Fall einer Lithiumionenzelle ist die Anode häufig aus einem Anodenträger aus Kupfer und einem aktiven Anodenmaterial zum Beispiel aus Graphit und die Kathode häufig aus einem Kathodenträger aus Aluminium und einem aktiven Kathodenmaterial aus lithierten Oxiden gebildet.

Die US 2007/077494 A1 offenbart eine Lithium-Sekundärbatterie mit einem Stromableiter, der mit dem aktiven Elektrodenmaterial der negativen Elektrode beschichtet ist, wobei der Stromableiter in einem speziellen Beispiel eine zinnhaltige Kupferlegierung ist.

Der vorliegenden Erfindung liegt die Aufgabe zugrunde, einen Energiespeicher mit einer verbesserten Langzeitstabilität bzw. eine Elektrode für einen solchen Energiespeicher vorzusehen.

Die Aufgabe wird durch eine Elektrode für einen Energiespeicher mit den Merkmalen des Anspruchs 1 gelöst. Vorteilhafte Ausgestaltungen und Weiterbildungen der Erfindung sind Gegenstand der abhängigen Ansprüche 2 bis 6. Ein Energiespeicher mit einer erfindungsgemäßen Elektrode ist in den Ansprüchen 7 bis 14 beschrieben.

Die Elektrode für einen Energiespeicher enthält einen Elektrodenträger und ein aktives Elektrodenmaterial, das einseitig oder beidseitig auf den Elektrodenträger aufgebracht ist. Erfindungsgemäß ist vorgesehen, dass der Elektrodenträger aus einer Legierung mit einem Kupferanteil gebildet ist, wobei diese Legierung zusätzlich wenigstens Zinn mit einem Gehalt von wenigstens etwa 0,01 Gew.-% aufweist.

Die vorgenannte Elektrode dient der Speicherung von Energie. Diese Elektrode speichert die Energie in chemischer Form. Zur Abgabe elektrischer Energie wird diese aus chemisch gespeicherte Energie umgewandelt. Je nach Ausbildung der Elektrode ist diese für nur einmalige Entladung oder auch zur Energieaufnahme geeignet. Während der Energieaufnahme, beispielsweise einem Ladevorgang, wird diese Energie in elektrischer Form zugeführt und in chemische Energie umgewandelt. Die Elektrode steht in wenigstens elektrischer Wirkverbindung mit einem Elektrolyten und einem Zuleiter.

Der vorgenannte Energiespeicher dient der Versorgung eines Antriebs eines Elektrofahrzeugs oder eines elektrischen Hybrid Fahrzeugs. Dieser Energiespeicher kann aber auch andere Antriebe oder Verbraucher versorgen. Wenn der Energiespeicher nur zur einmaligen Abgabe elektrischer Energie dient, so spricht man von einer Primärzelle oder auch Batterie. Je nach Ausbildung kann dieser Energiespeicher auch elektrische Energie aufnehmen, beispielsweise durch Laden. In diesem Fall spricht man von einer Sekundärzelle oder einem Akkumulator. Innerhalb des Energiespeichers bzw. innerhalb dessen wenigstens einer galvanischen Zelle wird elektrische in chemische Energie umgewandelt und umgekehrt. An dieser Energiewandlung sind zwei Elektroden und ein Elektrolyt beteiligt. Mit jeder dieser Elektroden ist ein eigener Zuleiter elektrisch leitend verbunden. Diese Zuleiter sind wiederum mit einem Verbraucher elektrisch leitend verbunden, beispielsweise mit dem Antrieb eines Kraftfahrzeugs.

Die vorgenannte Elektrode weist einen Elektrodenträger auf. Dieser Elektrodenträger ist ein elektrisch leitender Feststoff. Dieser Elektrodenträger weist vorzugsweise wenigstens ein Metall oder Graphit, erfindungsgemäß eine Legierung unter Beteiligung wenigstens von Kupfer und Zinn auf. Bevorzugt weist der Elektrodenträger wenigstens ein Kristallgitter auf, in der Praxis eine Vielzahl von Kristallgittern. Der Elektrodenträger leitet Elektronen aus diesem aktiven Elektrodenmaterial über den Zuleiter zum Verbraucher und auch in umgekehrter Richtung.

Die vorgenannte Elektrode weist ferner aktives Elektrodenmaterial auf. Bei dem aktiven Elektrodenmaterial handelt es sich um ein Stoffgemisch, welches beispielsweise pastenartig beschaffen ist. Dieses aktive Elektrodenmaterial steht in Wirkverbindung mit dem Elektrolyten. Zwischen diesen beiden findet auch der Austausch von lonen statt. Das aktive Elektrodenmaterial ist einseitig oder beidseitig auf den Elektrodenträger aufgebracht und steht mit diesem in elektrischer Wirkverbindung. Elektronen werden durch Leitung zwischen Elektrodenträger und aktivem Elektrodenmaterial übertragen.

Vorzugsweise ist der Elektrodenträger aus einer elektrisch leitenden Legierung gebildet. welche überwiegend Kupfer sowie Zinn mit einem Gehalt von wenigstens etwa 0,01 Gew.-% aufweist. Die erstarrte Legierung weist eine Vielzahl von Kristallgittern auf. Bei der Erstarrung flüssigen Kupfers bilden die einzelnen Kupferatome eine bevorzugte Kristallgitterform. Vorhandene Zinnatome ersetzen dabei einzelne Kupferatome in dessen Kristallgitter. Ein bestimmtes Volumen des Werkstoffs weist somit überwiegend Kupferatome und eine gewisse Anzahl Zinnatome als sogenannte Fremdatome aus.

Bei der Versorgung eines elektrischen Antriebs eines Kraftfahrzeugs kann eine Tiefentladung nicht immer zuverlässig ausgeschlossen werden. Selbst bei gewissen Restladungen bzw. Restspannungen wird bereits Kupfer aus einem Elektrodenträger gelöst. Dieser Lösungsvorgang ist nicht völlig umkehrbar, der Elektrodenträger bzw. der Energiespeicher altert. Die Ausbildung eines Elektrodenträgers aus dieser Legierung hat zur Folge, dass im Vergleich zu anderen Kupferlegierungen bei geringer Restladung bzw. Restspannung weniger Kupfer unumkehrbar gelöst wird. Mit Verwendung der vorgeschlagenen Legierung für den Elektrodenträger wird die zugrundegelegte Aufgabe gelöst.

Die wie oben beschrieben ausgebildete Elektrode ist daher insbesondere für großformatige Energiespeicher mit einer großen Kapazität und hoher Leistungsfähigkeit geeignet, wie sie zum Beispiel für Elektrofahrzeuge und elektrische Hybridfahrzeuge benötigt werden.

Bevorzugt ist die Legierung für diesen Elektrodenträger so hergestellt, dass das enthaltene Kupfer den größten Gewichtsanteil dieser Legierung bildet.

Bevorzugt weist die Legierung Mischkristalle aus Kupfer und Zinn auf. In diesen Mischkristallen ist eine gewisse Anzahl von Kupferatomen durch Zinnatome ersetzt. Ein Zinnatom weist im Vergleich zu einem Kupferatom einen geringfügig größeren Atomradius auf. Der größere Durchmesser der Zinnatome bzw. Fremdatome bewirkt eine Verzerrung des Gitters aus Kupferatomen. So wird auch eine mechanische Verfestigung des Werkstoffs bzw. des Elektrodenträgers erreicht. Weiterhin zeichnet sich diese Legierung durch hohe elektrische und thermische Leitfähigkeiten aus. Auch zeigt diese Legierung gute Korrosionsbeständigkeit und Beständigkeit gegen Spannungsrisskorrosion.

Der Zinngehalt des Elektrodenträgers bzw. der Legierung liegt vorzugsweise in einem Bereich von 0,05 bis 0,3 Gew.-%, besonders bevorzugt in einem Bereich von 0,1 bis etwa 0,15 Gew.-%.

Gemäß einem zweiten Aspekt wird die oben genannte Aufgabe durch einen Energiespeicher mit den Merkmalen des Anspruchs 7 gelöst. Vorteilhafte Ausgestaltungen und Weiterbildungen der Erfindung sind Gegenstand der abhängigen Ansprüche 8 bis 14.

Der Energiespeicher enthält eine erste Elektrode (z.B. negative Elektrode, Anode), eine zweite Elektrode (z.B. positive Elektrode, Kathode) und ein Trennelement zwischen der ersten und der zweiten Elektrode, das einen direkten elektrischen Kontakt zwischen den beiden Elektroden verhindert. Die erste und/oder die zweite Elektrode sind dabei als eine Elektrode ausgebildet, wie sie oben beschrieben worden ist.

Bei dem Energiespeicher kann es sich zum Beispiel um eine Sekundärzelle (d.h. wiederaufladbare galvanische Zelle), eine Primärzelle (d.h. nicht wiederaufladbare galvanische Zelle), einen Kondensator oder dergleichen handeln.

Besonders bevorzugt ist der Einsatz der erfindungsgemäßen Elektrode in einer Lithium(ionen)zelle. Dabei weist der Energiespeicher wenigstens zwei Elektroden, ein Trennmittel, welches keine Elektronen leitet, und ferner einen Elektrolyten als lonenleiter auf. Der Elektrolyt ist dabei wenigstens teilweise im Trennmittel angeordnet. Bevorzugt weist wenigstens eine der Elektroden und/oder dieser Elektrolyt Lithium und/oder Lithium-lonen auf.

In einer weiteren Ausgestaltung der Erfindung kann der Energiespeicher einen Stapel aus mehreren ersten Elektroden und mehreren zweiten Elektroden enthalten, die abwechselnd übereinander gestapelt sind und zwischen denen jeweils ein Trennelement angeordnet ist.

Die vorliegende Erfindung ist in vorteilhafter Weise sowohl bei Energiespeichern anwendbar, bei denen die erste(n) und die zweite(n) Elektrode(n) geschichtet sind, als auch bei solchen, bei denen die erste(n) und die zweite(n) Elektrode(n) gewickelt sind.

Obige sowie weitere Merkmale und Vorteile der Erfindung werden aus der nachfolgenden Beschreibung bevorzugter, nicht-einschränkender Ausführungsbeispiele unter Bezugnahme auf die beiliegenden Zeichnungen besser verständlich. Darin zeigen:
- Fig. 1: eine schematische Schnittansicht einer Elektrode gemäß einem ersten Ausführungsbeispiel der Erfindung;
- Fig. 2: eine schematische Schnittansicht einer Elektrode gemäß einem zweiten Ausführungsbeispiel der Erfindung;
- Fig. 3: eine schematische Schnittansicht einer Elektrode gemäß einem dritten Ausführungsbeispiel der Erfindung;
- Fig. 4: eine schematische Schnittansicht einer Elektrode gemäß einem vierten Ausführungsbeispiel der Erfindung;
- Fig. 5: eine schematische Schnittansicht eines Energiespeichers mit einer Elektrode gemäß der Erfindung;

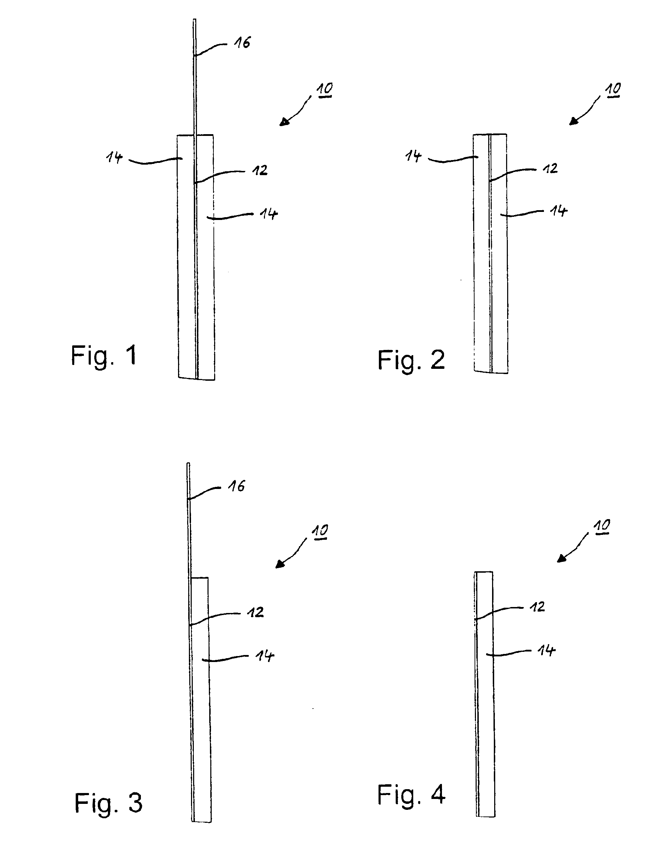

Bezug nehmend auf Fig. 1 bis 4 wird zunächst der Aufbau von verschiedenen Ausführungsbeispielen einer Elektrode für einen Energiespeicher näher erläutert.

Fig. 1 zeigt ein erstes Ausführungsbeispiel einer erfindungsgemäß konfigurierten Elektrode für einen Energiespeicher im Schnitt. Die Elektrode 10 weist einen Elektrodenträger 12 auf, auf den beidseitig ein aktives Elektrodenmaterial 14 aufgebracht ist. In dem Ausführungsbeispiel von Fig. 1 ist das aktive Elektrodenmaterial 14 dabei nicht im gesamten Bereich auf den Elektrodenträger 12 aufgebracht, sodass der Elektrodenträger 12 auf wenigstens einer Seite aus dem aktiven Elektrodenmaterial 14 herausragt. Dieser aus dem aktiven Elektrodenmaterial 14 herausragende Teil des Elektrodenträgers 12 kann so als Stromableiter 16 zum Zuführen eines Ladestroms zur Elektrode 10 bzw. Abführen eines Entladestroms von der Elektrode 10 benutzt werden.

Das in Fig. 2 veranschaulichte Ausführungsbeispiel unterscheidet sich von dem obigen ersten Ausführungsbeispiel darin, dass das aktive Elektrodenmaterial 14 beidseitig vollflächig auf den Elektrodenträger 12 aufgebracht ist, sodass dieser nicht aus dem aktiven Elektrodenmaterial 14 herausragt. In diesem Fall kann beim Aufbau eines Energiespeichers ggf. ein separater Stromableiter mit dem Elektrodenträger 12 in dessen Verlängerung verbunden (z.B. verschweißt) werden.

Das dritte Ausführungsbeispiel der Elektrode, das in Fig. 3 dargestellt ist, unterscheidet sich von dem oben beschriebenen ersten Ausführungsbeispiel darin, dass der Elektrodenträger 12 nur einseitig mit dem aktiven Elektrodenmaterial 14 beschichtet ist.

Das vierte Ausführungsbeispiel von Fig. 4 stellt eine Kombination der obigen zweiten und dritten Ausführungsbeispiele dar. D.h. das aktive Elektrodenmaterial 14 ist nur einseitig auf den Elektrodenträger 12 aufgebracht und der Elektrodenträger 12 ist auf der einen Seite im Wesentlichen vollflächig mit dem aktiven Elektrodenmaterial 14 versehen.

Der Elektrodenträger 12 wird in allen Ausführungsformen zum Beispiel in der Form einer Folie, eines Bandes, einer Platte, eines Bleches oder dergleichen bereitgestellt und beispielsweise aus einer entsprechenden Lösung elektrolytisch auf Walzen abgeschieden. Die Dicke des Elektrodenträgers 12 liegt zum Beispiel im Bereich von etwa 4 µm bis etwa 80 µm, bevorzugter im Bereich von etwa 5 µm bis etwa 50 µm, noch bevorzugter im Bereich von etwa 5 µm bis etwa 30 µm.

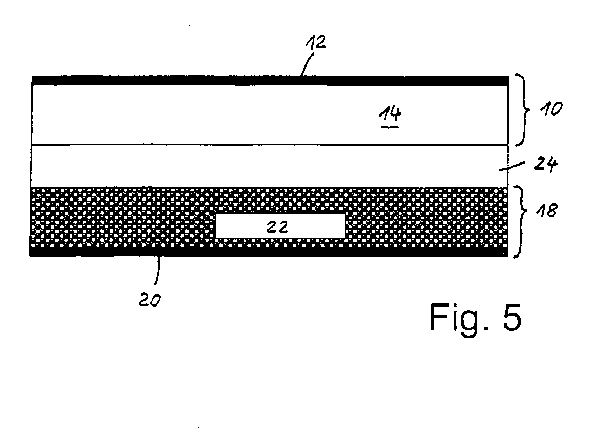

Fig. 5 zeigt ein Beispiel eines Energiespeichers, in dem eine oben beschriebene Elektrode 10 benutzt wird.

Der Energiespeicher, zum Beispiel eine wiederaufladbare Sekundärzelle, eine Primärzelle, ein Kondensator oder dergleichen, weist eine erste Elektrode 10 (z.B. negative Elektrode bzw. Anode), eine zweite Elektrode 18 (z.B. positive Elektrode bzw. Kathode) und ein Trennelement 24 zwischen den beiden Elektroden 10, 18 auf. Als erste Elektrode 10 wird beispielsweise eine Elektrode verwendet, wie sie in Fig. 1 bis 4 dargestellt ist. Die zweite Elektrode 18 ist grundsätzlich analog zur ersten Elektrode 10 aufgebaut, d.h. sie enthält ebenfalls einen Elektrodenträger 20 und ein aktives Elektrodenmaterial 22, das einseitig oder beidseitig auf den Elektrodenträger 20 aufgebracht ist.

Das Trennelement 24 zwischen den beiden Elektroden 10, 18 verhindert einen direkten, elektrisch leitenden Kontakt zwischen den beiden Elektroden 10,18. Das Trennelement 24 kann bündig mit den Elektroden 10, 18 (insbesondere deren aktiven Bereichen 14, 22) abschließen, wie in Fig. 5 angedeutet. Es kann aber auch vorteilhaft sein, wenn das Trennelement 24 auf zumindest einer Seite über das aktive Elektrodenmaterial 14, 22 der direkt benachbarten Elektrode 10, 18 hinausragt.

Der Energiespeicher kann zum Beispiel genau eine erste Elektrode 10, ein Trennelement 24 und eine zweite Elektrode 18 umfassen, wie in Fig. 5 veranschaulicht. In vielen Anwendungsfällen ist es aber von Vorteil, wenn der Energiespeicher einen Stapel aus mehreren ersten Elektroden 10 und mehreren zweiten Elektroden 18, die abwechselnd übereinander gestapelt sind und zwischen denen jeweils ein Trennelement 24 angeordnet ist, enthält.

Außerdem kann der Energiespeicher den anhand von Fig. 5 erläuterten Aufbau bzw. den Stapelaufbau entweder in einer gewickelten Form oder in einer geschichteten Form aufweisen.

Gemäß der Erfindung wird vorgeschlagen, für die erste und/oder die zweite Elektrode 10, 18 des Energiespeichers ein spezielles Material zu verwenden. Die nachfolgend erläuterte Materialauswahl ist dabei besonders vorteilhaft für eine Anode 10 einer Lithiumionenzelle einsetzbar, ohne dass die vorliegende Erfindung auf diese spezielle Anwendung beschränkt sein soll.

Der Elektrodenträger 12 der Elektrode 10 (siehe Fig. 1 bis 4) für einen Energiespeicher (siehe Fig. 5) ist aus einer Legierung gebildet, welche wenigstens überwiegend Kupfer sowie Zinn mit einem Gehalt von wenigstens etwa 0,01 Gew.-% aufweist.

Bevorzugt weist die Legierung Mischkristalle aus Kupfer und Zinn auf. Dabei ist das Kristallgitter überwiegend von Kupfer gebildet. Einzelne Kupferatome sind durch Zinnatome ersetzt, welche deren Gitterplätze besetzen.

Der Zinngehalt des Elektrodenträgers liegt vorzugsweise in einem Bereich von 0,05 bis 0,3 Gew.-%, besonders bevorzugt in einem Bereich von 0,1 bis etwa 0,15 Gew.-%.

Als ein spezielles Beispiel für das Material des Elektrodenträgers 10 einer Elektrode 10 für einen Energiespeicher kann das Kupfermaterial mit der Bezeichnung "PNA 216" der Prymetall GmbH & Co. KG, Deutschland, verwendet werden. Dieses Kupfermaterial hat einen Zinngehalt von mindestens 0,10 Gew.-%. Die spezifische elektrische Leitfähigkeit dieses Kupfermaterials beträgt etwa 49 MS/m (im weichen Zustand), seine Wärmeleitfähigkeit etwa 350 W/m·K.

Bezüglich der Materialien für das aktive Elektrodenmaterial 14 der Anode 10, für den Elektrodenträger 20 und das aktive Elektrodenmaterial 22 der Kathode 18 sowie für das Trennelement 24 bestehen im Rahmen der vorliegenden Erfindung keine besonderen Einschränkungen. Geeignete Materialien für diese Komponenten, die im Fall einer Lithiumionenzelle eingesetzt werden können, sind zum Beispiel ausführlich in der eingangs bereits genannten DE 10 2005 042 916 A1 beschrieben, auf welche hiermit ausdrücklich Bezug genommen wird. Außerdem ist auch die Herstellung der Elektroden 10, 18 und der Energiespeicher im Rahmen der Erfindung nicht auf spezielle Verfahren beschränkt.

Die oben beschriebene Elektrode der Erfindung ist insbesondere für großformatige Energiespeicher (speziell sekundäre Lithiumionenzellen) mit einer großen Kapazität und einem hohen Leistungsvermögen von über 3 oder 5 Ah bis zu 300 Ah und mehr, die zudem eine ausgezeichnete Langzeitstabilität von zum Beispiel über 3.000 Lade/Entlade-Zyklen und mehr und Versorgungssicherheit erfordern. Energiespeicher mit einer solchen Elektrode können dabei in vorteilhafter Weise zum Beispiel in Elektrofahrzeugen und elektrischen Hybridfahrzeugen eingesetzt werden.

## Patentansprüche

1. Elektrode (10) für einen Energiespeicher, mit
einem Elektrodenträger (12);
und einem aktiven Elektrodenmaterial (14), welches einseitig oder beidseitig auf den Elektrodenträger (12) aufgebracht ist, wobei der Elektrodenträger (12) aus einer Legierung mit einem Kupferanteil gebildet ist, der den größten Gewichtsanteil der Legierung bildet, und wobei diese Legierung zusätzlich wenigstens Zinn mit einem Gehalt von wenigstens 0,01 Gew.-% aufweist,
**dadurch gekennzeichnet, dass**
die Legierung Mischkristalle unter Beteiligung von Kupfer und Zinn mit einer Vielzahl von Kristallgittern aufweist, in der Kupferatome eine bevorzugte Kristallgitterform bilden, in der Zinnatome Kupferatome in dessen Kristallgitter ersetzen und eine Verzerrung des Gitters aus Kupferatomen bewirken.

2. Elektrode nach einem der vorhergehenden Ansprüche,
**gekennzeichnet durch**
ein Graphit enthaltendes pastenartiges Stoffgemisch als aktives Elektrodenmaterial.

3. Elektrode nach einem der vorhergehenden Ansprüche,
**dadurch gekennzeichnet, dass**
die Legierung des Elektrodenträgers (12) mindestens 0,05 Gew.-% Zinn aufweist.

4. Elektrode nach einem der vorhergehenden Ansprüche,
**dadurch gekennzeichnet, dass**
das Legierung des Elektrodenträgers (12) mindestens 0,1 Gew.-% Zinn aufweist.

5. Elektrode nach einem der vorhergehenden Ansprüche,
**dadurch gekennzeichnet, dass**
die Legierung des Elektrodenträgers (12) höchstens 0,3 Gew.-% Zinn aufweist.

6. Elektrode nach einem der Ansprüche 1 bis 4,
**dadurch gekennzeichnet, dass**
die Legierung des Elektrodenträgers (12) höchstens 0,15 Gew.-% Zinn aufweist.

7. Energiespeicher, mit
einer ersten Elektrode (10);
einer zweiten Elektrode (18); und
einem Trennelement (24) zwischen der ersten und der zweiten Elektrode, **dadurch gekennzeichnet, dass**
die erste und/oder die zweite Elektrode (10, 18) als eine Elektrode nach einem der Ansprüche 1 bis 6 ausgebildet ist.

8. Energiespeicher nach Anspruch 7,
**dadurch gekennzeichnet, dass**
der Energiespeicher eine Sekundärzelle ist.

9. Energiespeicher nach Anspruch 7,
**dadurch gekennzeichnet, dass**
der Energiespeicher eine Primärzelle ist.

10. Energiespeicher nach Anspruch 7
**dadurch gekennzeichnet, dass**
der Energiespeicher ein Kondensator ist.

11. Energiespeicher nach einem der Ansprüche 8 bis 10,
**dadurch gekennzeichnet, dass**
der Energiespeicher ferner einen Elektrolyten aufweist, wobei wenigstens eine Elektrode und/oder dieser Elektrolyt Lithium und/oder Lithium-Ionen umfasst.

12. Energiespeicher nach einem der Ansprüche 7 bis 11,
**dadurch gekennzeichnet, dass**
der Energiespeicher einen Stapel aus mehreren ersten Elektroden (10) und
mehreren zweiten Elektroden (18) enthält, die abwechselnd übereinander gestapelt sind und zwischen denen jeweils ein Trennelement (24) angeordnet ist.

13. Energiespeicher nach einem der Ansprüche 7 bis 12,
**dadurch gekennzeichnet, dass**
die erste(n) und zweite(n) Elektrode(n) (10, 18) geschichtet sind.

14. Energiespeicher nach einem der Ansprüche 7 bis 12,
**dadurch gekennzeichnet, dass**
die erste(n) und zweite(n) Elektrode(n) (10, 18) gewickelt sind.

## Claims

1. An electrode (10) for an energy storage device, comprising an electrode bearer (12);
and an active electrode material (14) which is applied onto one or both sides of the electrode bearer (12), wherein the electrode bearer (12) is made from an alloy having a percentage of copper which constitutes the largest percentage of the alloy by weight, and wherein said alloy additionally contains at least tin at a content of at least 0.01 % by weight,
**characterized in that**
the alloy comprises mixed crystals containing copper and tin in a plurality of crystal lattices, in which copper atoms form a preferred crystal lattice shape in which tin atoms replace copper atoms in said crystal lattice and effect a distortion of the copper atom lattice.

2. The electrode according to the preceding claim,
**characterized by**
a paste-like mixture of material containing graphite as the active electrode material.

3. The electrode according to one of the preceding claims,
**characterized in that**
the alloy of the electrode bearer (12) contains at least 0.05% by weight tin.

4. The electrode according to any one of the preceding claims,
**characterized in that**
the alloy of the electrode bearer (12) contains at least 0.1% by weight tin.

5. The electrode according to any one of the preceding claims,
**characterized in that**
the alloy of the electrode bearer (12) contains at the most 0.3% by weight tin.

6. The electrode according to any one of claims 1 to 4,
**characterized in that**
the alloy of the electrode bearer (12) contains at the most 0.15% by weight tin.

7. An energy storage device, comprising
a first electrode (10);
a second electrode (18); and
a separator element (24) between the first and the second electrode, **characterized in that**
the first and/or the second electrode (10, 18) is/are designed as an electrode in accordance with one of claims 1 to 6.

8. The energy storage device according to claim 7,
**characterized in that**
the energy storage device is a secondary cell.

9. The energy storage device according to claim 7,
**characterized in that**
the energy storage device is a primary cell.

10. The energy storage device according to claim 7,
**characterized in that**
the energy storage device is a capacitor.

11. The energy storage device according to any one of claims 8 to 10, **characterized in that**
the energy storage device further comprises an electrolyte, wherein at least one electrode and/or said electrolyte comprises lithium and/or lithium ions.

12. The energy storage device according to any one of claims 7 to 11, **characterized in that**
the energy storage device contains a stack of a plurality of first electrodes (10) and a plurality of second electrodes (18) which are stacked alternatingly over one another and between which of each a separator element (24) is disposed.

13. The energy storage device according to any one of claims 7 to 12, **characterized in that**
the first and the second electrode or electrodes (10, 18) are coated.

14. The energy storage device according to any one of claims 7 to 12, **characterized in that**
the first and the second electrode or electrodes (10, 18) are coiled.

## Revendications

1. Electrode (10) pour un accumulateur d'énergie, comprenant un porte-électrode (12) ; et un matériau d'électrode actif (14), qui est appliqué sur une face ou sur les deux faces sur le porte-électrode (12), le porte-électrode (12) étant formé à partir d'un alliage ayant une certaine teneur en cuivre, qui forme la plus grande partie en masse de l'alliage, cet alliage comportant en outre au moins de l'étain, avec une teneur d'au moins 0,01 % en poids,
**caractérisée en ce que** l'alliage comprend des cristaux mixtes, avec participation de cuivre et d'étain, avec un grand nombre de réseaux cristallins, alliage dans lequel les atomes de cuivre forment une forme préférée de réseau cristallin, dans lequel des atomes d'étain remplacent les atomes de cuivre se trouvant dans son réseau cristallin, et occasionnent une distorsion du réseau d'atomes de cuivre.

2. Electrode selon la revendication précédente, **caractérisée par** un mélange pâteux de matières, contenant du graphite, servant de matériau d'électrode actif.

3. Electrode selon l'une des revendications précédentes, **caractérisée en ce que** l'alliage du porte-électrode (12) comprend au moins 0,05 % en poids d'étain.

4. Electrode selon l'une des revendications précédentes, **caractérisée en ce que** l'alliage du porte-électrode (12) comprend au moins 0,1 % en poids d'étain.

5. Electrode selon l'une des revendications précédentes, **caractérisée en ce que** l'alliage du porte-électrode (12) comprend au plus 0,3 % en poids d'étain.

6. Electrode selon l'une des revendications 1 à 4, **caractérisée en ce que** l'alliage du porte-électrode (12) comprend au plus 0,15 % en poids d'étain.

7. Accumulateur d'énergie, comprend une première électrode (10) ; une deuxième électrode (18) ; et un élément séparateur (24) entre la première et la deuxième électrodes,
**caractérisé en ce que** la première et/ou la deuxième électrodes (10, 18) sont configurées comme une électrode selon l'une des revendications 1 à 6.

8. Accumulateur d'énergie selon la revendication 7, **caractérisé en ce que** l'accumulateur d'énergie est une pile secondaire.

9. Accumulateur d'énergie selon la revendication 7, **caractérisé en ce que** l'accumulateur d'énergie est une pile primaire.

10. Accumulateur d'énergie selon la revendication 7, **caractérisé en ce que** l'accumulateur d'énergie est un condensateur.

11. Accumulateur d'énergie selon l'une des revendications 8 à 10, **caractérisé en ce que** l'accumulateur d'énergie comprend en outre un électrolyte, au moins une électrode et/ou cet électrolyte comprenant du lithium et/ou des ions lithium.

12. Accumulateur d'énergie selon l'une des revendications 7 à 11, **caractérisé en ce que** l'accumulateur d'énergie contient un empilement de plusieurs premières électrodes (10) et de plusieurs deuxièmes électrodes (18), qui sont empilées les unes sur les autres d'une manière alternée, et entre chacune desquelles est disposé un élément séparateur (24).

13. Accumulateur d'énergie selon l'une des revendications 7 à 12, **caractérisé en ce que** la ou les premières et deuxièmes électrodes (10, 18) sont enrobées.

14. Accumulateur d'énergie selon l'une des revendications 7 à 12, **caractérisé en ce que** la ou les premières et deuxièmes électrodes (10, 18) sont spiralées.
